# DEMANDE DE BREVET EUROPEEN

(11) **EP 1 533 213 A1**
(43) Date de publication de la demande: **25.05.2005**
(21) Numéro de dépôt: 04292720.2
(22) Date de dépôt: 17.11.2004
(51) Int. Cl.: B62D 23/00

(54) **Véhicule léger d'un nouveau type**

(30) Priorité: 21.11.2003 FR 0313652
(71) Demandeur: Microcar, 85600 Bouffere (FR)
(72) Inventeur: Louis, Vincent, 85600 Montaigu (FR)
(74) Mandataire: Laget, Jean-Loup

(57) **Abrégé**

L'invention concerne un véhicule léger du type constitué d'au moins un habitacle et d'un compartiment avant destiné à contenir le groupe moteur transmission, ce compartiment comportant une structure entourant les organes mécaniques, en particulier l'ensemble moteur/boîte du véhicule, cette structure s'étendant, depuis des montants (2) d'encadrement de portière du véhicule, en direction de l'avant du véhicule.

Ce véhicule léger est caractérisé en ce que la structure du compartiment moteur est organisée, dans la direction avant-arrière du véhicule, en deux parties (3, 4) à propriétés de résistance mécanique différentes, la partie (3) antérieure de la structure, qui porte le moteur, constituant une partie déformable à déformation contrôlée au moyen de zones de faiblesse positionnées en des emplacements prédéterminés en vue d'absorber et de freiner l'inertie de déplacement du bloc moteur, tandis que la partie (4) postérieure de la structure est, à l'inverse, renforcée de manière à constituer une partie (4) postérieure suffisamment rigide pour arrêter le recul du bloc.

## Description

La présente invention concerne un véhicule léger du type constitué d'au moins un habitacle et d'un compartiment avant destiné à contenir le groupe moteur transmission.

Elle concerne plus particulièrement un véhicule léger du type dans lequel ce compartiment avant comporte une structure entourant les organes mécaniques, en particulier l'ensemble moteur/boîte du véhicule, cette structure, formée essentiellement de longerons, de traverses et de montants, s'étendant, depuis des montants d'encadrement de portière du véhicule, en direction de l'avant du véhicule, ces montants d'encadrement de portières étant eux-mêmes reliés entre eux par l'intermédiaire d'un tablier apte à séparer le compartiment moteur de l'habitacle.

Les véhicules légers sans permis aptes à être conduits dès l'âge de 16 ans se sont développés depuis de nombreuses années. Un certain nombre de contraintes réglementaires telles qu'une vitesse limitée à 45 km/h, une puissance du moteur limitée à 4 kW et un poids limité à 350 kg s'applique à ce type de véhicule. Ces contraintes ont pour conséquence la nécessité d'utiliser des matériaux légers, de limiter les dimensions du véhicule et d'adapter la tenue aux efforts du véhicule en cas de choc, tenue qui doit être plus faible que celle d'un véhicule d'une tonne roulant à 90 km/h. Les contraintes en termes de dimension et de poids ont amené les constructeurs de tels véhicules à réviser la conception de ces derniers.

Il est à noter que ces contraintes en termes de dimension et de poids ne sont pas comparables à celles qui s'appliquent à des châssis de véhicule traditionnels du type de ceux décrits dans le brevets WO 02/49905, US-3.759.540 et US-6.533.348.

Un but de la présente invention est donc de proposer un véhicule léger dont la structure du compartiment avant est apte à remplir simultanément deux rôles, à savoir d'une part un rôle de support de la partie mécanique, d'autre part un rôle d'absorption d'énergie ou d'amortisseur en cas de choc.

Un autre but de la présente invention est de proposer un véhicule léger dont la structure entourant les organes mécaniques est apte à incorporer l'ensemble des éléments devant être portés ou supportés tout en garantissant une résistance aux chocs identique, voire supérieure, à celle obtenue dans le cas d'utilisation de longerons droits de grand diamètre couramment utilisés dans l'automobile, solution exclue dans le cadre de la présente invention.

A cet effet, l'invention a pour objet un véhicule léger du type constitué d'au moins un habitacle et d'un compartiment avant destiné à contenir le groupe moteur transmission, ce compartiment comportant une structure entourant les organes mécaniques, en particulier l'ensemble moteur/boîte du véhicule, cette structure, formée essentiellement de longerons, de traverses et de montants, s'étendant, depuis des montants d'encadrement de portière du véhicule, en direction de l'avant du véhicule, ces montants d'encadrement de portières étant eux-mêmes reliés entre eux par l'intermédiaire d'un tablier apte à séparer le compartiment moteur de l'habitacle, caractérisé en ce que la structure du compartiment moteur est organisée, dans la direction avant-arrière du véhicule, en deux parties à propriétés de résistance mécanique différentes, la partie antérieure de la structure, qui porte le moteur, constituant une partie déformable à déformation contrôlée au moyen de zones de faiblesse positionnées en des emplacements prédéterminés en vue d'absorber et de freiner l'inertie de déplacement du bloc moteur, tandis que la partie postérieure de la structure est, à l'inverse, renforcée de manière à constituer une partie postérieure suffisamment rigide pour arrêter le recul du bloc et empêcher la déformation de l'ensemble de la structure au-delà d'une valeur apte à générer un endommagement important du tablier de séparation du compartiment moteur de l'habitacle.

Grâce à la conception du compartiment avant du véhicule, la partie antérieure de la structure de ce véhicule est programmée pour s'effondrer à une valeur d'effort déterminée tandis que la partie arrière est conçue pour résister aux efforts et offrir une grande rigidité.

L'invention sera bien comprise à la lecture de la description suivante d'exemples de réalisation, en référence aux dessins annexés dans lesquels :
la figure 1 représente une vue partielle ¾ avant d'une structure de compartiment moteur conforme à l'invention ;
la figure 2 représente une vue schématique partielle de côté de la structure représentée à la figure 1 ;

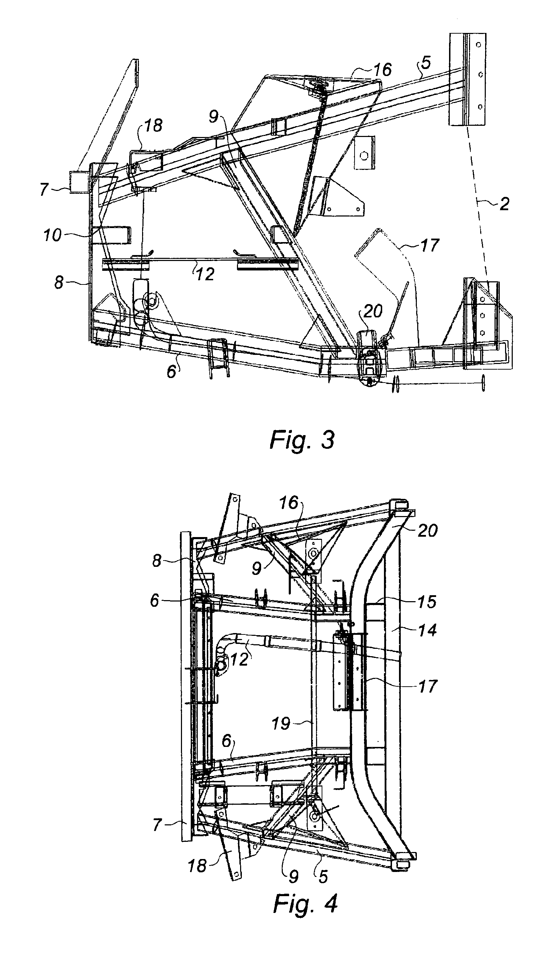

la figure 3 représente une vue schématique partielle de côté de la structure représentée à la figure 1 et
la figure 4 représente une vue schématique partielle de dessus de la structure représentée à la figure 1.

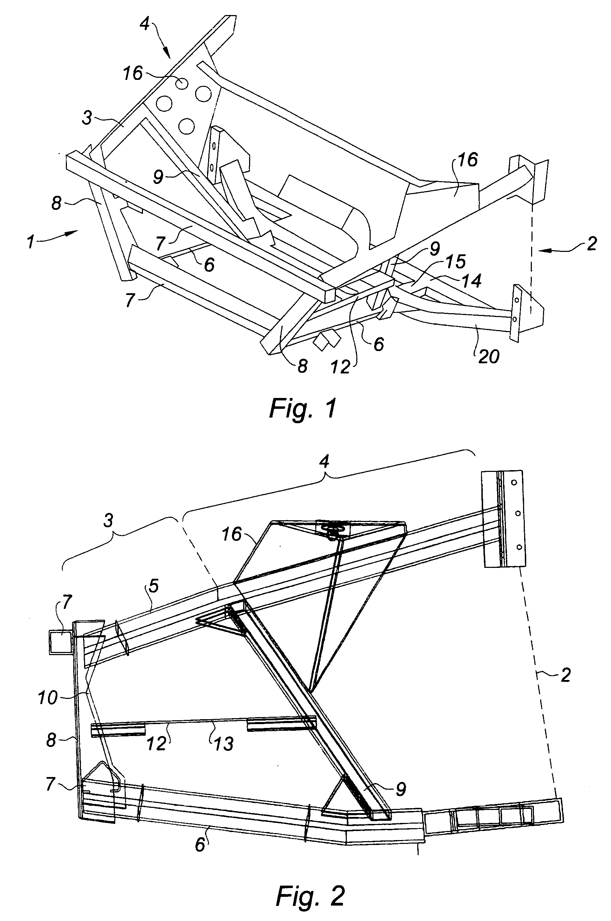

Comme mentionné ci-dessus, le véhicule léger, objet de l'invention, est constitué d'au moins un habitacle et d'un compartiment avant destiné à contenir le groupe moteur transmission. Ce compartiment comporte une structure entourant les organes mécaniques, en particulier l'ensemble moteur/boîte du véhicule. Cette structure est formée essentiellement de longerons, de traverses et de montants, s'étendant, depuis les montants 2 d'encadrement de portière du véhicule, représentés en pointillé aux figures, en direction de l'avant du véhicule. Ces montants 2 d'encadrement de portières sont eux-mêmes reliés entre eux par l'intermédiaire d'un tablier (non représenté) apte à séparer le compartiment moteur de l'habitacle. La conception du compartiment moteur doit être telle que le tablier subit un endommagement le plus réduit possible en cas de choc. A cet effet, la structure du compartiment moteur est organisée dans la direction avant-arrière du véhicule en deux parties 3 et 4 à propriétés de résistance mécanique différentes. La partie 3 antérieure de la structure, qui porte le moteur, constitue une partie déformable à déformation contrôlée au moyen de zones de faiblesse positionnées en des emplacements prédéterminés en vue d'absorber et de freiner l'inertie de déplacement du bloc moteur. Ces zones de faiblesse peuvent notamment être constituées par des micro-enfoncements suivis d'un passage sous presse des longerons 5 et 6 de la structure qui seront décrits ci-après en vue d'obtenir des longerons de type accordéon. La partie 4 postérieure de la structure, qui porte la boîte du groupe moteur, est, à l'inverse, renforcée de manière à constituer une partie 4 postérieure suffisamment rigide pour arrêter le recul du bloc moteur et empêcher la déformation de l'ensemble de la structure au-delà d'une valeur apte à générer un endommagement trop important du tablier de séparation du compartiment moteur de l'habitacle. Ainsi, dans l'exemple représenté à la figure 1, la structure du compartiment moteur est constituée de deux longerons 5 longitudinaux supérieurs, dits respectivement droite et gauche, s'étendant depuis les montants 2 d'encadrement de portière en direction de l'avant du véhicule, de deux longerons 6 inférieurs, dits respectivement droite et gauche, s'étendant depuis une traverse 20, dite de direction, reliant les montants 2 d'encadrement de portière, en direction de l'avant du véhicule. Ces longerons 5 et 6 sont à l'avant du véhicule reliés entre eux d'une part par une traverse 7 avant couplant un longeron 5, 6 à un longeron 5, 6 situé sensiblement à un même niveau, d'autre part par un montant 8 avant reliant un longeron 5 supérieur droit ou respectivement gauche à un longeron inférieur 6 droit ou respectivement gauche. Des montants 9 de renfort supplémentaires relient chaque longeron 5 supérieur à la traverse 20 de direction ou à un longeron 6 inférieur dans sa zone de liaison à ladite traverse 20 de direction. Ces montants 9 de renfort marquent la séparation de la partie 3 antérieure déformable de la structure de la partie 4 postérieure résistante de ladite structure. Ainsi, la traverse 20 support de direction marque, en partie inférieure, la zone d'arrêt de l'écrasement du bloc tandis que les montants 9 de renfort délimitent la zone d'arrêt du bloc avant en partie supérieure.

Dans les exemples représentés, pour des raisons de rigidité et d'orientation de la déformation de ladite structure, les montants 8 avant et les traverses 7 avant supérieure et inférieure de la structure forment un cadre trapézoïdal dont la grande base est formée par la traverse 7 supérieure de la structure. La traverse 7 inférieure avant de la structure constitue quant à elle la traverse porteuse du groupe moteur. Les montants 8, situés à l'avant du véhicule et servant à relier la traverse 7 avant inférieure support du moteur et la traverse 7 avant supérieure, comportent, sur leur longueur, en un emplacement prédéterminé, une amorce 10 de rupture autorisant une désolidarisation des longerons 5, 6 supérieur et inférieur à la suite d'un choc frontal. Ces montants 8 sont réalisés par pliage de tôle La traverse 7 avant supérieure de la partie déformable de la structure se présente quant à elle sous forme d'un élément tubulaire de section de préférence carrée. Cette traverse avant supérieure constitue ainsi la première pièce impactée. Elle est donc réalisée sous forme d'une pièce fusible, c'est-à-dire démontable pour les chocs basse vitesse. Cette traverse avant supérieure sert de support à la gâche de capot. Elle peut également servir de support aux feux avant. Les longerons inférieurs sont également des pièces déterminantes lors d'un choc. Ces longerons inférieurs doivent absorber un maximum d'énergie lors d'un choc. Ils jouent en outre le rôle de support des triangles de suspension et de pièces insonorisantes non représentées.

Il est également prévu, entre l'un des montants 8 reliant les traverses 7 avant supérieure et inférieure et un montant 9 de renfort, une entretoise 12 servant de support à la batterie du véhicule. Ce support entretoise 12 est pourvu d'une amorce 13 de rupture en un emplacement quelconque de sa longueur. Cette amorce 13 de rupture entraîne un pliage du support entretoise 12 lors d'un choc frontal. Les longerons inférieurs 6 sont orientés d'un point antérieur haut vers un point bas arrière du véhicule de manière à provoquer, lors d'un choc, un écrasement partiel du longeron inférieur 6 parallèlement à un mouvement d'élévation de ce dernier. De la même manière, les longerons supérieurs sont pré-orientés pour permettre, lors d'un choc, d'orienter la déformation en direction du sol. La traverse 20, support de direction, est quant à elle cintrée en direction de l'avant du véhicule et est rigidifiée par un élément de renfort 14 positionné en arrière de ladite traverse cintrée 20. Ce renfort 14 relie les extrémités de la traverse entre elles. Des entretoises 15 supplémentaires sont éventuellement prévues entre élément de renfort 14 et traverse cintrée 20. Cet élément de renfort 14, qui rigidifie la traverse 20 support de direction, doit notamment bloquer des efforts en Y qui seraient dévastateurs pour la caisse du véhicule.

Enfin, il est prévu, en arrière des montants 9 de renfort, participant à la rigidification de la partie 4 postérieure de la structure, des chapelles 16 d'amortisseurs servant à la fixation des amortisseurs des roues de véhicule. Chaque chapelle 16 se présente sous forme d'une pièce d'allure pyramidale insérée dans l'angle formé par le montant 9 de renfort avec le longeron 5 supérieur. L'une des bases de la pyramide de la pièce est soudée au montant 9 de renfort tandis qu'une autre base de la pyramide est soudée au longeron 5 supérieur. Au moins l'une des faces de la pièce est pourvue d'un trou pour le passage desdits amortisseurs. La présence de ces chapelles 16 d'amortisseur permet de rigidifier considérablement la liaison entre le longeron 5 supérieur et les montants 9 de renfort. Ces chapelles 16 d'amortisseur jouent à la fois le rôle de support des têtes d'amortisseur et de support radiateur. De même, les montants 9 de renfort servent de support de radiateur et de support de pièces insonorisantes. La traverse 20 support de direction sert quant à elle à supporter la boîte de vitesse et la crémaillère. A cet effet, une pièce support représentée en 17 aux figures s'étend depuis cette traverse 20 support de direction.

Les longerons supérieurs 5 et inférieurs 6 sont quant à eux réalisés, de préférence, à partir de tubes carrés dont les angles et les parois sont conformés pour créer des zones d'affaiblissement en des emplacements déterminés. Ces longerons comportent notamment, comme mentionné ci-dessus, des micro-enfoncements et sont soumis, lors de leur réalisation, à une compression longitudinale.

Parallèlement, des renforcements peuvent être prévus localement et venir aider à la déformation contrôlée obtenue par introduction de zones de faiblesse.

Grâce à la conception d'un tel bâti de la structure du compartiment moteur, on obtient, lors d'un choc frontal à des vitesses de l'ordre de 45 km/h, des déformations contrôlées de la structure qui permettent d'épargner le plus possible le tablier de séparation du compartiment moteur de l'habitacle. Il en résulte que les risques de blessures des passagers de l'habitacle sont réduits.

## Revendications

1. Véhicule léger du type constitué d'au moins un habitacle et d'un compartiment avant destiné à contenir le groupe moteur transmission, ce compartiment comportant une structure entourant les organes mécaniques, en particulier l'ensemble moteur/boîte du véhicule, cette structure, formée essentiellement de longerons, de traverses et de montants, s'étendant, depuis des montants (2) d'encadrement de portière du véhicule, en direction de l'avant du véhicule, ces montants (2) d'encadrement de portières étant eux-mêmes reliés entre eux par l'intermédiaire d'un tablier apte à séparer le compartiment moteur de l'habitacle,
**caractérisé en ce que** la structure du compartiment moteur est organisée, dans la direction avant-arrière du véhicule, en deux parties (3, 4) à propriétés de résistance mécanique différentes, la partie (3) antérieure de la structure, qui porte le moteur, constituant une partie déformable à déformation contrôlée au moyen de zones de faiblesse positionnées en des emplacements prédéterminés en vue d'absorber et de freiner l'inertie de déplacement du bloc moteur, tandis que la partie (4) postérieure de la structure est, à l'inverse, renforcée de manière à constituer une partie (4) postérieure suffisamment rigide pour arrêter le recul du bloc et empêcher la déformation de l'ensemble de la structure au-delà d'une valeur apte à générer un endommagement important du tablier de séparation du compartiment moteur de l'habitacle.

2. Véhicule léger selon la revendication 1,
**caractérisé en ce que** la structure du compartiment moteur est constituée de deux longerons (5) supérieurs, dits respectivement droite et gauche, s'étendant depuis les montants (2) d'encadrement de portière en direction de l'avant du véhicule, de deux longerons (6) inférieurs, dits respectivement droite et gauche, s'étendant depuis une traverse (20) dite de direction reliant les montants (2) d'encadrement de portière, en direction de l'avant du véhicule, lesdits longerons (5, 6) étant à l'avant du véhicule reliés entre eux d'une part par une traverse (7) avant couplant un longeron (5, 6) à un longeron (5, 6) situé sensiblement à un même niveau, d'autre part par un montant (8) avant reliant un longeron (5) supérieur droit ou respectivement gauche à un longeron inférieur (6) droit ou respectivement gauche, des montants (9) de renfort supplémentaires reliant chaque longeron (5) supérieur à la traverse (20) de direction ou à un longeron (6) inférieur dans sa zone de liaison à ladite traverse (20) de direction, ces montants (9) de renfort marquant la séparation de la partie (3) antérieure déformable de la structure de la partie (4) postérieure résistante de ladite structure.

3. Véhicule léger selon la revendication 2,
**caractérisé en ce que** les montants (8) avant et les traverses (7) avant supérieure et inférieure de la structure forment un cadre trapézoïdal dont la grande base est formée par la traverse (7) supérieure de ladite structure.

4. Véhicule léger selon l'une des revendications 2 et 3,
**caractérisé en ce que** la traverse (7) inférieure avant de la structure constitue la traverse porteuse du moteur.

5. Véhicule léger selon l'une des revendications 2 à 4,
**caractérisé en ce que** les montants (8), situés à l'avant du véhicule et servant à relier la traverse (7) avant inférieure support du moteur et la traverse (7) avant supérieure, comportent, sur leur longueur en un emplacement prédéterminé, une amorce (10) de rupture autorisant une désolidarisation des longerons (5, 6) supérieur et inférieur à la suite d'un choc frontal.

6. Véhicule léger selon l'une des revendications 2 à 5,
**caractérisé en ce qu'**il est prévu, entre l'un des montants (8) reliant les traverses (7) avant supérieure et inférieure et un montant (9) de renfort, une entretoise (12) servant de support à la batterie du véhicule, ce support entretoise (12) étant pourvu d'une amorce (13) de rupture en un emplacement quelconque de sa longueur, cette amorce de rupture entraînant un pliage du support entretoise (12) lors d'un choc frontal.

7. Véhicule léger selon l'une des revendications 2 à 6,
**caractérisé en ce que** les longerons inférieurs (6) sont orientés d'un point antérieur haut vers un point bas arrière de manière à provoquer, lors d'un choc, un écrasement partiel du longeron inférieur (6) parallèlement à un mouvement d'élévation de ce dernier.

8. Véhicule léger selon l'une des revendications 2 à 7,
**caractérisé en ce que** les longerons (5) et (6) de la structure sont constitués d'éléments tubulaires carrés dont les angles et les parois sont conformés pour créer des zones d'affaiblissement en des emplacements déterminés.

9. Véhicule léger selon l'une des revendications 2 à 8,
**caractérisé en ce que** la traverse (20), support de direction, est cintrée en direction de l'avant du véhicule et est rigidifiée par un élément de renfort (14) positionné en arrière de ladite traverse cintrée (20), ce renfort (14) reliant lesdites extrémités de la traverse entre elles, des entretoises (15) supplémentaires étant éventuellement prévues entre élément de renfort (14) et traverse cintrée (20).

10. Véhicule léger selon l'une des revendications 2 à 9,
**caractérisé en ce qu'**il est prévu, en arrière des montants (9) de renfort participant à la rigidification de la partie (4) postérieure de la structure, des chapelles (16) d'amortisseurs servant à la fixation des amortisseurs des roues de véhicule, chaque chapelle (16) se présentant sous forme d'une pièce d'allure pyramidale insérée dans l'angle formé par le montant (9) de renfort avec le longeron (5) supérieur, l'une des bases de la pyramide de ladite pièce étant soudée au montant (9) de renfort tandis qu'une autre base est soudée au longeron (5) supérieur, au moins l'une des faces de la pièce étant pourvue de trou pour le passage d'un amortisseur.
